# EUROPEAN PATENT APPLICATION

(11) **EP 4 503 747 A1**
(43) Date of publication of application: **05.02.2025**
(21) Application number: 24191209.6
(22) Date of filing: 26.07.2024
(51) Int. Cl.: H04W 40/12, H04W 76/00, H04W 84/12

(54) **SYSTEM AND METHOD FOR MAINTAINING CHANNEL CONNECTIVITY IN WIRELESS LAN**

(30) Priority: 31.07.2023 US 202318361977
(71) Applicant: Avago Technologies International Sales Pte. Limited, Singapore 768923 (SG)
(72) Inventor: Buhari, Nizamudeen Mohamed, Irvine, 92618 (US); Sahoo, Jimut Ranjan, Irvine, 92618 (US)
(74) Representative: Dilg, Haeusler, Schindelmann Patentanwaltsgesellschaft mbH

(57) **Abstract**

A device (100) may include a plurality of processors (12-1, 12-2, ..., 12-N) coupled to one or more network interfaces (14-1, ..., 14-M) configured to provide wireless connectivity, and a controller (10). The controller (10) may be configured to establish a wireless connection (120-1, ..., 120-K) via a first processor (12-1) of the plurality of processors (12-1, 12-2, ..., 12-N). Responsive to a trigger of the first processor (12-1) scanning for one or more channels, the controller (10) may be configured to transfer the established wireless connection (120-1, ..., 120-K) from the first processor (12-1) to a second processor (12-2) of the plurality of processors (12-1, 12-2, ..., 12-N). The second process (12-2) is different from the first processor (12-1). Responsive to the second processor (12-2) detecting data to be received from the established wireless connection (120-1, ..., 120-K), the controller (10) may be configured to transfer the established wireless connection (120-1, ..., 120-K) from the second processor (12-2) back to the first processor (12-1).

## Description

### Field of the Disclosure

This disclosure generally relates to systems and methods for processing wireless connections, and more particularly to efficiently processing wireless connections when a wireless device performs off-channel activities or a roaming process.

### Background

In a wireless device (e.g., device including a Wi-Fi chip or integrated circuit), when the device already has a Wi-Fi connection (e.g., connection to an AP), but an off channel activity (e.g., channel scanning) is initiated for any purposes, the existing Wi-Fi connection on the specific channel/band may get disturbed as the radio goes off channel. In another scenario, when roaming (e.g., Wi-Fi roaming) occurs, once a roam target (e.g., a new AP) is found, the Wi-Fi device (or Wi-Fi chip thereof) may attempt to establish a new connection with the roam target by assuming that the connection with the new AP would be better than the existing connection with the old AP (e.g., connection to an old AP). But, sometimes, if the connection with the new AP does not perform better than the old AP, the Wi-Fi chip may come back to the existing network by reestablishing a connection with the old AP.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a schematic block diagram of a configuration including an example always on channel connectivity (AOCC) system (or AOCC device) and a plurality of access points (APs), in accordance with an embodiment.
FIG. 2 is a schematic block diagram of a computing system, according to an embodiment.
FIG. 3 is a timing diagram of AOCC operations for performing a channel scan, in accordance with an embodiment.
FIG. 4 is a timing diagram of AOCC operations for connecting a new AP, in accordance with an embodiment.
FIG. 5 is a flow diagram showing a process of performing AOCC operations, in accordance with an embodiment.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over, or on a second feature in the description that follows may include embodiments in which the first and second features are formed in direct contact and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Various embodiments disclosed herein are related to a device including a plurality of processors coupled to one or more network interfaces configured to provide wireless connectivity, and a controller. In some embodiments, the processors may be one or more microprocessor units or special purpose processors, one or more single core or multi-core processors, or any circuitry that execute instructions (or computer programs) received from memory. In some embodiments, the controller may be any hardware (e.g., microprocessors), software, firmware, or any combination thereof that can control the plurality of processors and network interfaces to provide wireless connectivity. In some embodiments, the one or more network interfaces may include the physical and data link layers of the OSI model for network communication, a wireless (e.g., radio) receiver/transmitter (e.g., for any of the IEEE 802.11 protocols, near field communication "NFC", Bluetooth, ANT, or any other wireless protocol), or any hardware (e.g., microprocessors), software, firmware, or any combination thereof that can provide wireless connectivity to the device. The controller may be configured to establish or create a wireless connection via a first processor of the plurality of processors. In some embodiments, the establishing or creating the wireless connection may include (1) the device associating with a network or another wireless device, (2) the device joining with the network or the another wireless device, (3) the device exchanging a connection or association request or a connection or association response with the another wireless device, (4) the device obtaining an association or connection identifier indicating an association or connection with the network or the another wireless device, or (5) any operation to associate, join, or communicate with, the network or the another wireless network.

In some embodiments, the wireless connection may be one or more network connection for any of the IEEE 802.11 protocols, near field communication "NFC", Bluetooth, ANT, or any other wireless protocol, or any wireless connections in layers (e.g., physical and data link layers) of the OSI model for network communication. Responsive to a trigger of the first processor scanning for one or more channels, the controller may be configured to transfer the established wireless connection from the first processor to a second processor of the plurality of processors. The second processor may be different from the first processor. In some embodiments, the trigger of the first processor scanning for the one or more channel may be any event or situation relating to a start of the scanning (e.g., an event of the first processor starting a process of the scanning, an event of the first processor communicating information regarding the start of the scanning to the controller, etc.). In some embodiments, the scanning may be any operation that scans/inspects/sees through/examines one or more wireless networks to choose a proper channel (e.g., channel that has relatively low interference or low traffic). Responsive to the second processor detecting data to be received from the established wireless connection, the controller may be configured to transfer the established wireless connection from the second processor back to the first processor. In some embodiments, the transfer of a wireless connection from the second processor to the first processor may be to cause the first processor to handle/process traffic (e.g., wireless packets/frames) received from or transmitted to the wireless connection and cause the second processor not to handle/process such traffic.

In some embodiments, responsive to completion of scanning for the one or more channels, the controller may be configured to transfer the established connection from the second processor back to the first processor. In some embodiments, the controller may be configured to establish the wireless connection via the first processor to an access point. In some embodiments, the access point may be a networking hardware device that allows Wi-Fi (802.11) devices to connect to a wired network, a software-enabled AP, or hardware (e.g., microprocessors), software, firmware, or any combination thereof that can provide wireless connections using wireless LAN technology. Responsive to transferring the established connection from the first processor to the second processor, the second processor may be configured to receive one or more beacons from the access point. In some embodiments, the beacons may be beacon frames or management frames in IEEE 802.11 based WLANs, or any frames that are transmitted periodically to announce the presence of a wireless LAN and to synchronize the members of a service set of the wireless LAN.

In some embodiments, responsive to transferring the established wireless connection from the second processor back to the first processor, the first processor may be configured to receive the data from the access point. Responsive to completion of receiving the data from the access point, the controller may be configured to transfer the established wireless connection from the first processor to the second processor. In some embodiments, the completion of receiving the data may be the completion of receiving all of the data that have been detected to be received from the established wireless connection. In some embodiments, the data to be received from the established wireless connection may be unicast data addressed to the device. In some embodiments, the unicast data may be any data exchanged/transmitted/received using unicast that is a single, direct request sent from one host/device (e.g., wireless host/device) to another host/device.

Various embodiments disclosed herein are related to a device including a plurality of processors coupled to one or more network interfaces configured to provide wireless connectivity, and a controller. The controller may be configured to establish a first wireless connection to a first access point via a first processor of the plurality of processors. The controller may be configured to transfer the first wireless connection from the first processor to a second processor of the plurality of processors. The second processor may be different from the first processor. The controller may be configured to establish a second wireless connection to a second access point via the first processor. Responsive to determining that a performance metric of the first wireless connection is greater than a performance metric of the second wireless connection, the controller may be configured to transfer the first wireless connection from the second processor back to the first processor.

In some embodiments, responsive to determining that the performance metric of the second wireless connection greater than the performance metric of the first wireless connection, the controller may be configured to terminate or tear down the first wireless connection transferred to the second processor. In some embodiments, the terminating or tearing down the first wireless connection may include (1) the device disassociating from a network or another wireless device, (2) the device disconnecting from the network or the another wireless device, (3) the device exchanging a disconnection or disassociation request or a disconnection or disassociation response with the another wireless device, or (4) any operation to stop or discontinue maintaining the first wireless connection. In some embodiments, the performance of a wireless connection may be measured using metrics including at least one of bandwidth, throughput, signal strength, network jitter, uptime, packet loss, or latency of the wireless connection, or any metric that can indicate efficiency and stability of various activities and components of the wireless network. In some embodiments, the controller may be configured to establish, while the second processor maintains the first wireless connection to the first access point, the second wireless connection to the second access point via the first processor.

In some embodiments, responsive to transferring the first wireless connection from the first processor to the second processor, the second processor may be configured to receive one or more beacons from the first access point. In some embodiments, responsive to the second processor detecting data to be received from the first access point, the controller may be configured to transfer the first wireless connection from the second processor back to the first processor. Responsive to transferring the first wireless connection from the second processor back to the first processor, the first processor may be configured to receive the data from the first access point.

Various embodiments disclosed herein are related to a method. The method includes establishing a first wireless connection via a first processor of a plurality of processors coupled to one or more network interfaces configured to provide wireless connectivity. The method may include responsive to a trigger of the first processor performing an operation, transfer the established first wireless connection from the first processor to a second processor of the plurality of processors. The second processor may be different from the first processor. The method may include transferring, while the first processor performs the operation, the established first connection from the second processor back to the first processor.

In some embodiments, the operation may be scanning for one or more channels. In transferring the established first connection from the second processor back to the first processor, responsive to the second processor detecting data to be received from the established first connection, the established first connection may be transferred from the second processor back to the first processor. Responsive to completion of scanning for the one or more channels, the established first connection may be transferred from the second processor back to the first processor.

In some embodiments, the first connection may be established to a first access point. The operation may be establishing a second wireless connection to a second access point via the first processor. In transferring the established connection from the second processor back to the first processor, responsive to determining that a performance metric of the first wireless connection is greater than a performance metric of the second wireless connection, the first wireless connection may be transferred from the second processor back to the first processor. In some embodiments, responsive to determining that the performance metric of the second wireless connection is greater than the performance metric of the first wireless connection, the first wireless connection transferred to the second processor may be terminated.

In one aspect, in a wireless device (e.g., device including a Wi-Fi chip or integrated circuit), when the device already has a Wi-Fi connection (e.g., connection to an AP), but an off channel activity (e.g., channel scanning) is initiated for any purposes, the existing Wi-Fi connection on the specific channel/band may get disturbed as the radio goes off channel. In order to avoid such disturbance, the Wi-Fi device can emulate a power save entry and then do the scan. However, as the entire scan may take a couple of seconds to complete, the existing connection may not be in off channel (e.g., power save state) for a prolonged period as that would affect the user experience. Hence, the Wi-Fi chip may move to the Wi-Fi on channel (e.g., active state) periodically and query the AP whether the AP has any downlink (DL) traffic to be serviced and then go to off channel again. This process may be repeated almost around every beacon interval or delivery traffic indication message (DTIM) interval irrespective of whether the DL traffic is available or not.

In another aspect, when roaming (e.g., Wi-Fi roaming) occurs, once a roam target (e.g., a new AP) is found, the Wi-Fi device (or Wi-Fi chip thereof) may attempt to establish a new connection with the roam target by assuming that the connection with the new AP would be successful and would also be better than the existing connection (e.g., connection to an old AP). But that may not be the case all the time. Sometimes, the Wi-Fi chip may need to come back to the existing network if the connection with the new AP does not perform better than the old AP. In such cases, the Wi-Fi chip may need to reestablish the connection with the old AP as the Wi-Fi device has been away from the existing connection for some time briefly when the Wi-Fi device has been in connection with the new AP.

To solve this problem, according to certain aspects, embodiments in the present disclosure relate to a technique to provide an efficient way of performing an off channel activity (e.g., channel scanning) when a Wi-Fi device is already in connection with a BSS network or an AP, and/or examining other Wi-Fi networks/APs for usage like opportunistic roam or location scan, etc.

In some embodiments, an always on channel connectivity (AOCC) system (or AOCC device) may include a controller, a plurality of processors (e.g., network processors, network cores, medium access control (MAC)/PHY processors, or Wi-Fi processors), and/or a plurality of network interfaces (e.g., TX/RX chains or interfaces). For example, the plurality of network interfaces may include one or more wireless (e.g., radio) receivers and/or one or more wireless transmitters, for any of the IEEE 802.11 protocols, near field communication "NFC", Bluetooth, ANT, or any other wireless protocol. The AOCC system or device may have configuration similar to that of a computing system. In some embodiments, the plurality of processors may include one or more MAC/PHY parallel processing units associated with a minimal 1x1 Tx/Rx chains/interfaces. In some embodiments, the plurality of processors may include one or more MAC/PHY parallel processing units associates with only Rx chains/interfaces. The plurality of processors may include one or more high-power MAC/PHY processors as a main (regular) processor, and one or more low-power MAC/PHY processors (e.g., an ultra-low power Wi-Fi (MAC/PHY) core) as an auxiliary (sub) processor. For example, a low power MAC/PHY processor as an auxiliary processor can listen to (or receive) frames at lower data rate, for example, 20 MHz bandwidth in 1x1 Tx/ Rx chain in parallel with the main processor. The auxiliary processor may optionally have transmission capability at lower data rates without affecting its ultra-low power characteristics. The auxiliary processor may share Tx/Rx chains with the main processor.

In some embodiments, the AOCC system/device may establish and/or maintain one or more wireless connections with corresponding APs. The controller may be any hardware (e.g., microprocessors), software, firmware, or any combination thereof that can control the plurality of processors and network interfaces to provide wireless connectivity to a plurality of APs. The processors may be one or more microprocessor units or special purpose processors, one or more single core or multi-core processors, or any circuitry that execute instructions (or computer programs) received from memory to perform wireless network operations (e.g., MAC/PHY layer operations). The plurality of network interfaces may include the physical and data link layers of the OSI model for network communication, a wireless (e.g., radio) receiver/transmitter (e.g., for any of the IEEE 802.11 protocols), or any hardware, software, firmware, or any combination thereof that can provide wireless connectivity from the AOCC system to the plurality of APs.

In some embodiments, the controller may control the plurality of processors to implement scan offload or beacon offload mechanisms. For example, if the plurality of processors includes a high power Wi-Fi processor (or core/slice) as a main (or regular) processor and a low power Wi-Fi processor (or core/slice) as an auxiliary (or sub) processor, the auxiliary processor may perform a scan offload or a beacon offload when necessary (e.g., when the main processor performs channel scanning or attempts to establish a new connection).

In some embodiments, if the auxiliary processor has transmission capability, the auxiliary processor may perform channel scanning for a scan offload, whereas the main processor is retained for connection. If the auxiliary processor does not have transmission capability, the auxiliary processor may not perform an active scan effectively and can be utilized only for background scan, but may not be used for establishing a connection to a new AP.

In some embodiments, the main processor, responsive to the controller, may be configured to hibernate as an operation of a beacon offload mechanism, and the auxiliary processor, responsive to the controller, may be configured to receive beacon frames periodically, e.g., at target beacon transmission time (TBTT). In this manner, the AOCC system can offload the connection to the auxiliary processor and use the main processor for performing a channel scan or attempting to establish a new connection so as to retain both the existing and new connections for a brief period to evaluate the performance of the existing and new connections and determine which one performs better among the two connections.

In one approach, in an AOCC system (e.g., Wi-Fi AOCC system) including a main processor and an auxiliary processor, when the main processor is to perform a channel scan, the main processor may put the current wireless link (on the connected channel) in a power save mode and go off channel, while the auxiliary processor being brought up on the connected channel. Hence, the auxiliary processor may take over the existing connection partially to track beacons (e.g., beacon frames in 802.11). In this manner, the main processor can complete the scan in a single stretch without bothering about the existing connection as the connection has already been offloaded to the auxiliary processor.

In some embodiments, the auxiliary processor (e.g., low power Wi-Fi processor) may be associated with Rx interface only. In such a case, if the auxiliary processor receives a beacon frame with a traffic indication message (TIM), the scan operation may be interrupted as the main processor may be switched back to the existing connection on the connected channel to receive/handle/process data indicated in the TIM. This switch back operation (or operation of transferring the connection back to the main processor) may not be performed regularly or periodically but be performed only on need basis. Thus, the scan and/or a subsequent roam connection can be quicker and more efficient than the existing available solutions (e.g., compared to the solution in which the switch back operation is repeated almost around every beacon interval or DTIM interval irrespective of whether the DL traffic is available or not). Moreover, this switch back mechanism can be useful to save power by completing the off channel activity earlier by parking/transferring the existing connection to the auxiliary processor and moving/transferring the connection back to the main processor only on need basis.

In some embodiments, when the scan or roam is initiated or triggered while an AOCC system (and a Wi-Fi chip thereof) already has a Wi-Fi connection, the connection may be offloaded or transferred from a main processor (e.g., high power Wi-Fi processor) to an auxiliary processor (e.g., low power Wi-Fi processor). The auxiliary processor can be in an off state or a standby mode during the normal time, but the auxiliary processor may become in an awake state just before TBTT to receive a beacon frame. Once the beacon frame received via the auxiliary processor is processed, the controller of the AOCC system may decode the TIM information element (IE) in the beacon frame and decide/determine whether the controller is to bring back the main processor for actual data exchange with the connected AP.

In some embodiments, in response to determining that the TIM IE indicates no unicast packets pending for the client (corresponding to the AOCC system), the controller may retain the auxiliary processor on the connected channel and put back to a standby mode until the next wake up either on TBTT or DTIM. In response to determining that the TIM IE indicates only broadcast/multicast packets pending for the client, the controller may retain the auxiliary processor on the connected channel to receive the broadcast/multicast packets or put back to a standby mode until the next wake up either on TBTT or DTIM.

In some embodiments, in response to determining that the TIM IE indicates unicast packets pending or available at the AP for the client (corresponding to the AOCC system), the controller may bring the main processor out of a power save mode and back to the connected channel. The controller may determine whether the auxiliary processor has a minimal transmission capability or not. In response to determining that the auxiliary processor has a minimal transmission capability, the controller may control the auxiliary processor to transmit a NULL frame or a PS-POLL frame to the AP while the main processor is brought back to the connected channel in parallel. In response to determining that the auxiliary processor does not have a minimal transmission capability, the controller may bring the main processor back to the connected channel and then cause the main processor to send a NULL frame or a PS-POLL frame to the AP for indicating that the client has come out of the power save mode and is ready to receive any unicast data traffic.

In some embodiments, while the main processor receives/processes unicast data traffic, the controller may control the auxiliary processor to perform the scan on a channel (if the auxiliary processor has transmission capability) on which the main processor has not completed the scan due to switching back to the connected channel. Upon completion of the main processor receiving/processing the unicast data traffic, the controller may control the main processor to resume the scan and control the auxiliary processor to switch back to the connected channel to receive beacon frames. Upon completion of the main processor preforming the scan, the controller may control the main processor to switch back to the connected channel to receive beacon frames.

In one approach, in an AOCC system (e.g., Wi-Fi AOCC system) including a main processor and an auxiliary processor, when the main processor is to establish a connection with a new AP as part of the roam or even after completing the connection with the new AP for a brief period of time to evaluate which of the connections among the two performs better, the main processor may put the current connection in a power save mode and attempt to connect with the new AP, while the auxiliary processor being brought up on the old connection. Hence, the auxiliary processor may take over the existing connection partially to track beacons (e.g., beacon frames in 802.11). In this manner, the controller can keep the context of both the connections and switch the (main and auxiliary) processors appropriately. The main processor can also make a new target connection as part of roaming without bothering about the existing connection as the connection has already been offloaded to the auxiliary processor.

In some embodiments, once the controller finds a new roam target (e.g., new AP) through a roam scan, the controller may use the main processor for making/establishing a new connection by parking/transferring the existing connection on/to the auxiliary processor. The auxiliary processor may keep track of beacon frames from the existing connected AP and inform the pending data traffic to the controller (e.g., based on the TIM information element (IE) in the beacon frames). The controller can decide/determine when to switch the main processor to the old connection to process the DL traffic from the existing connected AP.

In some embodiments, the controller may determine whether the controller is performing one of (1) authentication frame exchange with the new AP, (2) association frame exchange with the new AP, or (3) 4-way handshake exchange with the new AP. In response to determining that the controller is performing one of the exchanges (1)-(3) with the new AP, the controller may defer processing the DL traffic from the old (existing) AP. In response to determining that the controller is in between the exchanges (1)-(3) with the new AP, the controller can switch the main processor to the old (existing) AP to process the DL traffic with the old connection. In other words, when the main processor is performing a critical activity on the new connection front, then swapping the connection back to the existing AP may be deferred up to a logical point but at the same time, the delay may be limited within a susceptible limit.

In some embodiments, when the new connection with a new AP is successfully made/established, the controller may evaluate the performance with the new AP by retaining the existing connection via the auxiliary processor. For example, the controller may compare a performance metric of the new connection with a performance metric of the existing connection, and determine, based on a result of the comparison, whether the new connection is performing better than the existing connection (e.g., the performance metric of the new connection is greater than the performance metric of the existing connection). In some embodiments, the controller may compare a performance metric of the new connection with a corresponding threshold, and determine, based on a result of the comparison, whether the new connection is performing better than the existing connection (e.g., the performance metric of the new connection is greater than the corresponding threshold). Examples of performance metrics of a wireless connection may include, but is not limited to, bandwidth, throughput, signal strength, network jitter, uptime, packet loss, or latency of the wireless connection, or any metric that can indicate efficiency and stability of various activities and components of the wireless network.

In some embodiments, in response to determining that the new connection is performing better than the existing connection (e.g., the performance metric of the new connection is greater than the performance metric of the existing connection), the controller may continue with the new connection by tearing down or terminating the existing connection. In response to determining that the new connection is not performing better than the existing connection, the controller may continue with the existing connection by tearing down or terminating the new connection.

In some embodiments, the auxiliary processor (e.g., low power Wi-Fi processor) may be associated with Rx interface only. In such a case, if the auxiliary processor receives a beacon frame with a TIM and the main processor is not performing a critical activity on the new connection, the main processor may be switched back to the existing connection to receive/handle/process data indicated in the TIM. This switch back operation (or operation of transferring the connection back to the main processor) may not be performed regularly or periodically but be performed only on need basis. Thus, the subsequent roam connection can be quicker and more efficient than the existing available solutions (e.g., compared to the solution in which the switch back operation is repeated almost around every beacon interval or DTIM interval irrespective of whether the DL traffic is available or not). Moreover, this switch back mechanism can be useful to save power by completing the activities on the new connection earlier by parking/transferring the existing connection to the auxiliary processor and moving/transferring the connection back to the main processor only on need basis. In some embodiments, in transferring a connection from a first processor to a second processor, the controller may send/pass, to the second processor, context information for maintaining the connection (e.g., channel, address, connection state according to IEEE 802.11 protocol or other wireless protocol) so that the second processor can take over and/or maintain the connection. In some embodiments, the context information (or connection information) may include (1) a channel number, (2) a bandwidth, (3) MAC addresses of the local and remote devices, (4) timing synchronization function (TSF) timestamps or offsets, or (5) states or context or connection information of hardware or firmware. In some embodiments, the context information may be read or referred to by the first processor (e.g., main processor) and/or may be programmed on the second processor (e.g., auxiliary processor). For example, the context information may be programmed on a processor in the same manner as the processor establish an initial connection (using the same context information).

In some embodiments, in response to determining that the TIM IE indicates unicast packets pending or available at the existing AP for the client (corresponding to the AOCC system), the controller may bring the main processor out of a power save mode and back to the old connection. The controller may determine whether the auxiliary processor has a minimal transmission capability or not. In response to determining that the auxiliary processor has a minimal transmission capability, the controller may control the auxiliary processor to transmit a NULL frame or a PS-POLL frame to the AP while the main processor is brought back to the old connection in parallel. In response to determining that the auxiliary processor does not have a minimal transmission capability, the controller may bring the main processor back to the old connection and then cause the main processor to send a NULL frame or a PS-POLL frame to the AP for indicating that the client has come out of the power save mode and is ready to receive any unicast data traffic.

In some embodiments, upon completion of the main processor receiving/processing the unicast data traffic, the controller may control the main processor to resume the activities on the new connection and control the auxiliary processor to switch back to the old connection to receive beacon frames. Upon completion of the main processor preforming the activities on the new connection or in response to determining that the new connection is not performing better than the existing connection, the controller may control the main processor to switch back to the old connection to receive beacon frames.

Embodiments in the present disclosure have at least the following advantages and benefits. First, embodiments in the present disclosure can provide useful techniques for efficiently performing a channel scan or establishing a new connection as part of roaming. The existing connection can be retained on the auxiliary processor when the main processor makes another connection with a roam target AP, then the controller can decide which connection to go with based on the performance of the connections. Using an AOCC system/device, any scan after connection or any new connection as part of roam can be more efficient and at the same with less power consumption, hence the AOCC system/device can enhance the user experience with a faster scan, a better roam decision or concurrent operations and save power in a wireless device (e.g., a battery powered Wi-Fi client device).

Second, embodiments in the present disclosure can provide useful techniques for efficiently offloading a connection to an auxiliary processor. As the connection is offloaded to the auxiliary processor, the main processor may not unnecessarily come/switch back to the on channel periodically to check whether any DL data is available or not. As this switching back operations are performed only on the need basis, the scan time as well as the homecoming time can be reduced. Moreover, as the connection is offloaded to the auxiliary processor, the broadcast/multicast packets can be received by the auxiliary processor itself.

Third, embodiments in the present disclosure can provide useful techniques for reducing power consumption in a wireless device. The power consumption can be less as the controller is not periodically bringing back the main processor to the ON channel, is not sending a NULL frame with PM=0 without even knowing whether DL data is available at the AP or not, and is not sending another NULL frame with PM=1 to go back off channel again. All this power wastage can be eliminated by parking the auxiliary processor in ON channel and waking the auxiliary processor up on the TBTT or DTIM.

Fourth, embodiments in the present disclosure can provide useful techniques for managing parallel connections using multiple network processors (e.g., main processor and auxiliary processor). The AOCC can be helpful in maintaining concurrency scenarios with better managing the parallel infrastructure mode Wi-Fi connections.

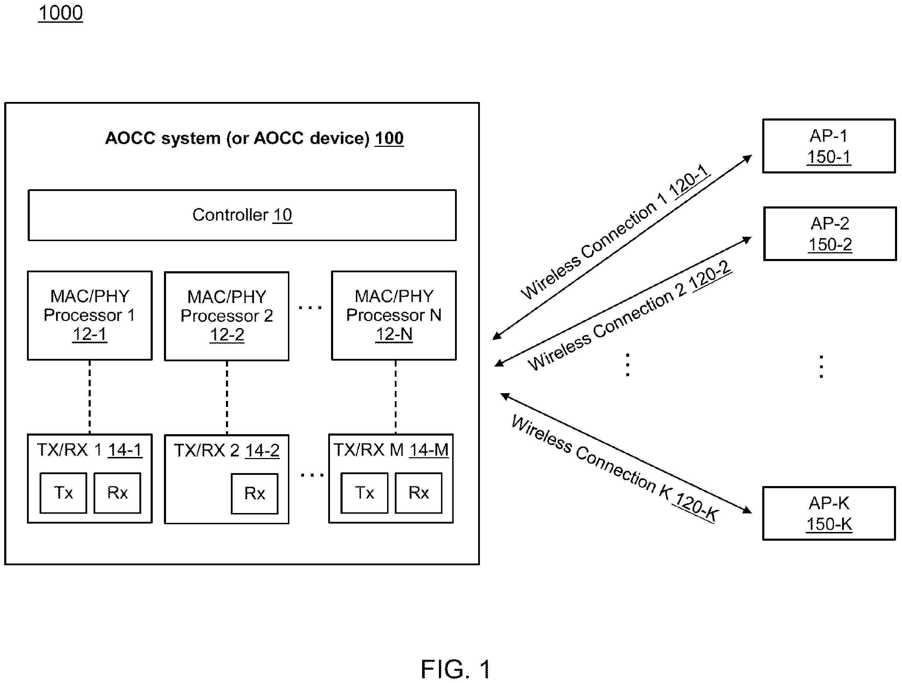

FIG. 1 is a schematic block diagram of a configuration 1000 including an example always on channel connectivity (AOCC) system (or AOCC device) 100 and a plurality of access points (APs) 150-1, 150-2, ..., 150-K (K is an integer greater than or equal to 1), in accordance with an embodiment.

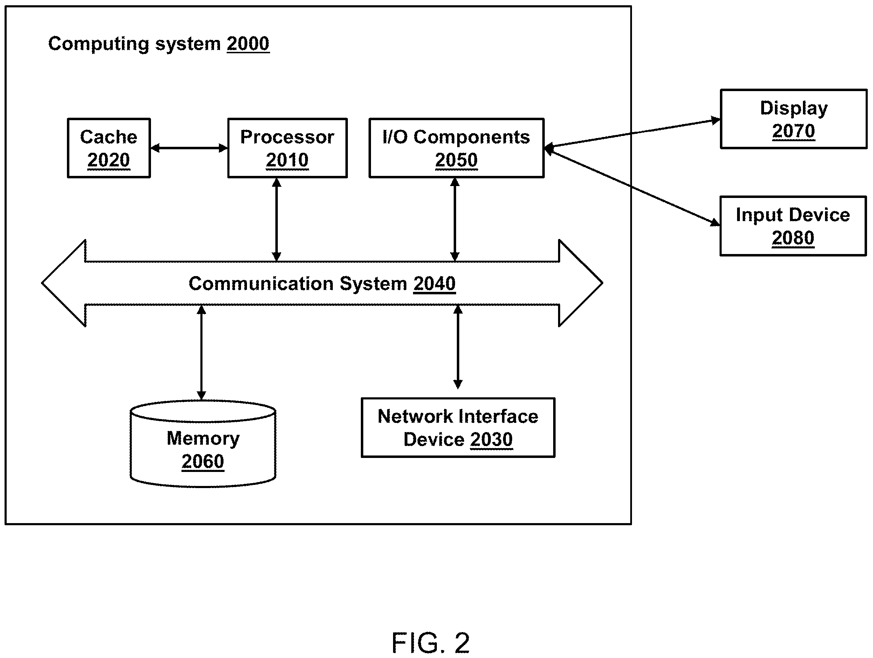

Referring to FIG. 1, an AOCC system 100 may include a controller 10, a plurality of processors 12-1, 12-2, ..., 12-N where N is an integer greater than 1 (e.g., network processors, network cores, MAC/PHY processors, or Wi-Fi processors), and/or a plurality of network interfaces 14-1, 14-2, ..., 14-M where N is an integer greater than 1 (e.g., TX/RX chains or interfaces). The AOCC system or device 100 may have configuration similar to that of a computing system 2000 shown in FIG. 2. The plurality of processors 12-1, 12-2, ..., 12-N may include one or more MAC/PHY parallel processing units associated with a minimal 1×1 Tx/Rx chain/interface (e.g., TX/RX interface 14-1). The plurality of processors may include one or more MAC/PHY parallel processing units associates with only Rx chains/interfaces (e.g., TX/RX interface 14-2). The plurality of processors may include one or more high-power MAC/PHY processors as a main (regular) processor (e.g., MAC/PHY processor 12-1), and one or more low-power MAC/PHY processors (e.g., an ultra-low power Wi-Fi (MAC/PHY) core) as an auxiliary (sub) processor (e.g., MAC/PHY processor 12-2). For example, a low power MAC/PHY processor 12-2 as an auxiliary processor can listen to (or receive) frames at lower data rate, for example, 20 MHz bandwidth in 1×1 Tx/ Rx chain in parallel with the main processor 12-1. The auxiliary processor (e.g., TX/RX interface 14-M) may optionally have transmission capability at lower data rates without affecting its ultra-low power characteristics. The auxiliary processor may share Tx/Rx chains with the main processor.

Referring to FIG. 1, the AOCC system/device 100 may establish and/or maintain one or more wireless connections 120-1, 120-2, ..., 120-K with corresponding APs 150-1, 150-2, ..., 150-K. The controller 10 may be any hardware (e.g., microprocessors 2010 in FIG. 2), software, firmware, or any combination thereof that can control the plurality of processors 12-1, 12-2, ..., 12-N and network interfaces 14-1, 14-2, ..., 14-M to provide wireless connectivity to the plurality of APs 150-1, 150-2, ..., 150-K. The processors 12-1, 12-2, ..., 12-N may be one or more microprocessor units or special purpose processors, one or more single core or multi-core processors, or any circuitry that execute instructions (or computer programs) received from memory to perform wireless network operations (e.g., MAC/PHY layer operations). The plurality of network interfaces 14-1, 14-2, ..., 14-M may include the physical and data link layers of the OSI model for network communication, a wireless (e.g., radio) receiver/transmitter (e.g., for any of the IEEE 802.11 protocols), or any hardware, software, firmware, or any combination thereof that can provide wireless connectivity from the AOCC system to the plurality of APs.

In some embodiments, the controller 10 may control the plurality of processors 12-1, 12-2, ..., 12-N to implement scan offload or beacon offload mechanisms. For example, if the plurality of processors includes a high power Wi-Fi processor (or core/slice) as a main (or regular) processor (e.g., 12-1) and a low power Wi-Fi processor (or core/slice) as an auxiliary (or sub) processor (e.g., 12-2), the auxiliary processor 12-2 may perform a scan offload or a beacon offload when necessary (e.g., when the main processor performs channel scanning or attempts to establish a new connection). If the auxiliary processor has transmission capability (e.g., processor 12-M), the auxiliary processor may perform channel scanning for a scan offload, whereas the main processor is retained for connection. If the auxiliary processor does not have transmission capability (e.g., processor 12-2), the auxiliary processor may not perform an active scan effectively and can be utilized only for background scan, but may not be used for establishing a connection to a new AP.

In some embodiments, the main processor 12-1, responsive to the controller 10, may be configured to hibernate as an operation of a beacon offload mechanism, and the auxiliary processor 12-2, responsive to the controller 10, may be configured to receive beacon frames periodically, e.g., at TBTT. In this manner, the AOCC system 100 can offload the connection to the auxiliary processor 12-2 and use the main processor 12-1 for performing a channel scan or attempting to establish a new connection so as to retain both the existing and new connections for a brief period to evaluate the performance of the existing and new connections and determine which one performs better among the two connections.

FIG. 2 is a schematic block diagram of a computing system, according to an embodiment. An illustrated example computing system 2000 includes one or more processors 2010 in communication, via a communication system 2040 (e.g., bus), with memory 2060, at least one network interface controller 2030 with network interface port for connection to a network (not shown), and other components, e.g., input/output ("I/O") components 2050. Generally, the processor(s) 2010 will execute instructions (or computer programs) received from memory. The processor(s) 2010 illustrated incorporate, or are directly connected to, cache memory 2020. In some instances, instructions are read from memory 2060 into cache memory 2020 and executed by the processor(s) 2010 from cache memory 2020.

In more detail, the processor(s) 2010 may be any logic circuitry that processes instructions, e.g., instructions fetched from the memory 2060 or cache 2020. In many implementations, the processor(s) 2010 are microprocessor units or special purpose processors. The computing device 2050 may be based on any processor, or set of processors, capable of operating as described herein. The processor(s) 2010 may be single core or multi-core processor(s). The processor(s) 2010 may be multiple distinct processors.

The memory 2060 may be any device suitable for storing computer readable data. The memory 2060 may be a device with fixed storage or a device for reading removable storage media. Examples include all forms of volatile memory (e.g., RAM), non-volatile memory, media and memory devices, semiconductor memory devices (e.g., EPROM, EEPROM, SDRAM, and flash memory devices), magnetic disks, magneto optical disks, and optical discs (e.g., CD ROM, DVD-ROM, or Blu-Ray^{®} discs). A computing system 2000 may have any number of memory devices 2060.

The cache memory 2020 is generally a form of computer memory placed in close proximity to the processor(s) 2010 for fast read times. In some implementations, the cache memory 2020 is part of, or on the same chip as, the processor(s) 2010. In some implementations, there are multiple levels of cache 2020, e.g., L2 and L3 cache layers.

The network interface controller 2030 manages data exchanges via the network interface (sometimes referred to as network interface ports). The network interface controller 2030 handles the physical and data link layers of the OSI model for network communication. In some implementations, some of the network interface controller's tasks are handled by one or more of the processor(s) 2010. In some implementations, the network interface controller 2030 is part of a processor 2010. In some implementations, the computing system 2000 has multiple network interfaces controlled by a single controller 2030. In some implementations, the computing system 2000 has multiple network interface controllers 2030. In some implementations, each network interface is a connection point for a physical network link (e.g., a cat-5 Ethernet link). In some implementations, the network interface controller 2030 supports wireless network connections and an interface port is a wireless (e.g., radio) receiver/transmitter (e.g., for any of the IEEE 802.11 protocols, near field communication "NFC", Bluetooth, ANT, or any other wireless protocol). In some implementations, the network interface controller 2030 implements one or more network protocols such as Ethernet. Generally, a computing device 2050 exchanges data with other computing devices via physical or wireless links through a network interface. The network interface may link directly to another device or to another device via an intermediary device, e.g., a network device such as a hub, a bridge, a switch, or a router, connecting the computing device 2000 to a data network such as the Internet.

The computing system 2000 may include, or provide interfaces for, one or more input or output ("I/O") devices. Input devices include, without limitation, keyboards, microphones, touch screens, foot pedals, sensors, MIDI devices, and pointing devices such as a mouse or trackball. Output devices include, without limitation, video displays, speakers, refreshable Braille terminal, lights, MIDI devices, and 2-D or 3-D printers.

Other components may include an I/O interface, external serial device ports, and any additional co-processors. For example, a computing system 2000 may include an interface (e.g., a universal serial bus (USB) interface) for connecting input devices, output devices, or additional memory devices (e.g., portable flash drive or external media drive). In some implementations, a computing device 2000 includes an additional device such as a co-processor, e.g., a math co-processor can assist the processor 2010 with high precision or complex calculations.

The components 2090 may be configured to connect with external media, a display 2070, an input device 2080 or any other components in the computing system 2000, or combinations thereof. The display 2070 may be a liquid crystal display (LCD), an organic light emitting diode (OLED), a flat panel display, a solid state display, a cathode ray tube (CRT), a projector, a printer or other now known or later developed display device for outputting determined information. The display 2070 may act as an interface for the user to see the functioning of the processor(s) 2010, or specifically as an interface with the software stored in the memory 2060.

The input device 2080 may be configured to allow a user to interact with any of the components of the computing system 2000. The input device 2080 may be a plurality pad, a keyboard, a cursor control device, such as a mouse, or a joystick. Also, the input device 2080 may be a remote control, touchscreen display (which may be a combination of the display 2070 and the input device 2080), or any other device operative to interact with the computing system 2000, such as any device operative to act as an interface between a user and the computing system 2000.

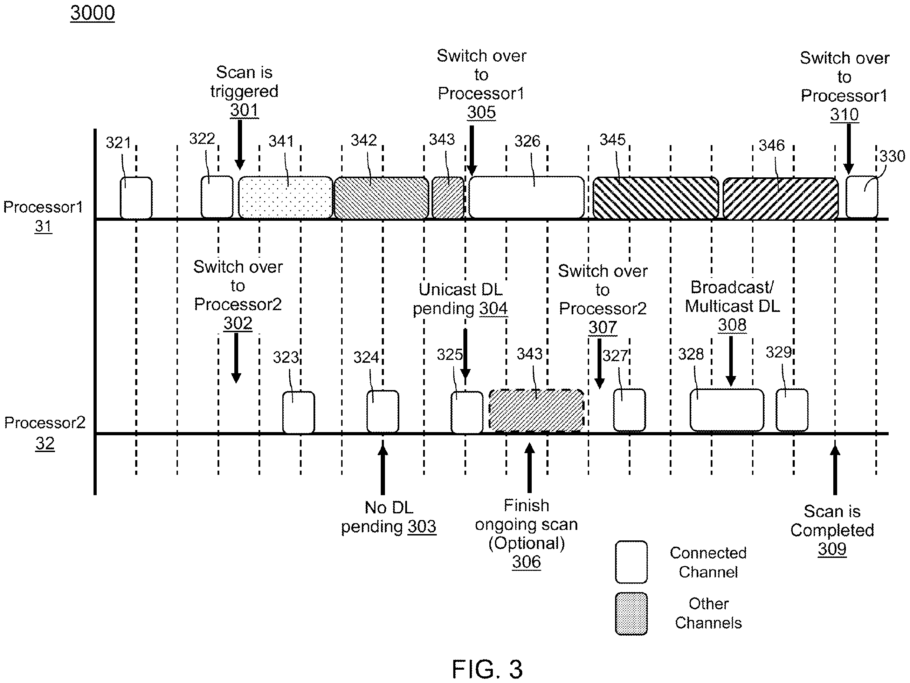

FIG. 3 is a timing diagram 3000 of AOCC operations for performing a channel scan, in accordance with an embodiment. In an AOCC system (e.g., Wi-Fi AOCC system) including a controller (e.g., controller 10), a main processor 31 and an auxiliary processor 32, when the main processor 31 is to perform a channel scan (e.g., triggering a scan at step 301), the main processor 31 may put the current wireless link (on the connected channel) in a power save mode and go off channel, while the auxiliary processor 32 being brought up on the connected channel (e.g., the current connection on the connected channel is switched over to the auxiliary processor 32 at step 302). Hence, the auxiliary processor 32 may take over the existing connection partially to track beacons (e.g., beacon frames 321, 322, 323, 324, 325, 327, 329). In this manner, the main processor 31 can complete the scan in a single stretch (e.g., scan on different channels 341, 342, 343) without bothering about the existing connection as the connection has already been offloaded to the auxiliary processor 32.

Referring to FIG. 3, the auxiliary processor 32 (e.g., low power Wi-Fi processor) may be associated with Rx interface only (e.g., auxiliary processor 12-2 in FIG. 1). In such a case, if the auxiliary processor 32 receives a beacon frame with a TIM (e.g., TIM indicates unicast DL traffic is pending at the AP at step 304), the scan operation on a channel (e.g., the channel 343) may be interrupted as the main processor 31 may be switched back to the existing connection on the connected channel to receive/handle/process data indicated in the TIM (e.g., the current connection on the connected channel is switched back to the main processor 31 at step 305). This switch back operation (or operation of transferring the connection back to the main processor) may not be performed regularly or periodically but be performed only on need basis. Thus, the scan and/or a subsequent roam connection can be quicker and more efficient than the existing available solutions (e.g., compared to the solution in which the switch back operation is repeated almost around every beacon interval or DTIM interval irrespective of whether the DL traffic is available or not). Moreover, this switch back mechanism can be useful to save power by completing the off channel activity earlier by parking/transferring the existing connection to the auxiliary processor and moving/transferring the connection back to the main processor only on need basis.

Referring to FIG. 3, when the scan or roam is initiated or triggered at step 301 while the AOCC system (and a Wi-Fi chip thereof) already has a Wi-Fi connection, the connection may be offloaded or transferred from the main processor 31 (e.g., high power Wi-Fi processor) to the auxiliary processor 32 (e.g., low power Wi-Fi processor). The auxiliary processor 32 can be in an off state or a standby mode during the normal time, but the auxiliary processor 32 may become in an awake state just before TBTT to receive a beacon frame (e.g., beacon frames 323, 324, 325). Once the beacon frame received via the auxiliary processor 32 is processed, the controller of the AOCC system (e.g., controller 10) may decode the TIM IE in the beacon frame and decide/determine whether the controller is to bring back the main processor 31 for actual data exchange with the connected AP.

In response to determining that the TIM IE indicates no unicast packets pending for the client (corresponding to the AOCC system) at step 303, the controller may retain the auxiliary processor 32 on the connected channel and put back to a standby mode until the next wake up either on TBTT or DTIM. In response to determining that the TIM IE indicates only broadcast/multicast packets pending for the client, the controller may retain the auxiliary processor 32 on the connected channel to receive the broadcast/multicast packets at step 308 or put back to a standby mode until the next wake up either on TBTT or DTIM.

In response to determining that the TIM IE indicates unicast packets pending or available at the AP for the client at step 304, the controller may bring the main processor out of a power save mode and back to the connected channel (e.g., the current connection on the connected channel is switched back to the main processor 31 at step 305). The controller may determine whether the auxiliary processor 32 has a minimal transmission capability or not. In response to determining that the auxiliary processor 32 has a minimal transmission capability, the controller may control the auxiliary processor to transmit a NULL frame or a PS-POLL frame to the AP while the main processor is brought back to the connected channel in parallel. In response to determining that the auxiliary processor 32 does not have a minimal transmission capability, the controller may bring the main processor back to the connected channel and then cause the main processor to send a NULL frame or a PS-POLL frame to the AP for indicating that the client has come out of the power save mode and is ready to receive any unicast data traffic.

Referring to FIG. 3, while the main processor 31 receives/processes 326 unicast data traffic, the controller may control the auxiliary processor 32 to perform the scan on the channel 343 (if the auxiliary processor has transmission capability) on which the main processor 32 has not completed the scan due to switching back to the connected channel at step 305. Upon completion of the main processor 31 receiving/processing 326 the unicast data traffic, the controller may control the main processor 31 to resume the scan (e.g., on channels 345, 346) and control the auxiliary processor 32 to switch back to the connected channel to receive beacon frames at step 307. Upon completion of the main processor preforming the scan at step 309, the controller may control the main processor 31 to switch back to the connected channel at step 310 to receive beacon frames (e.g., beacon frame 330).

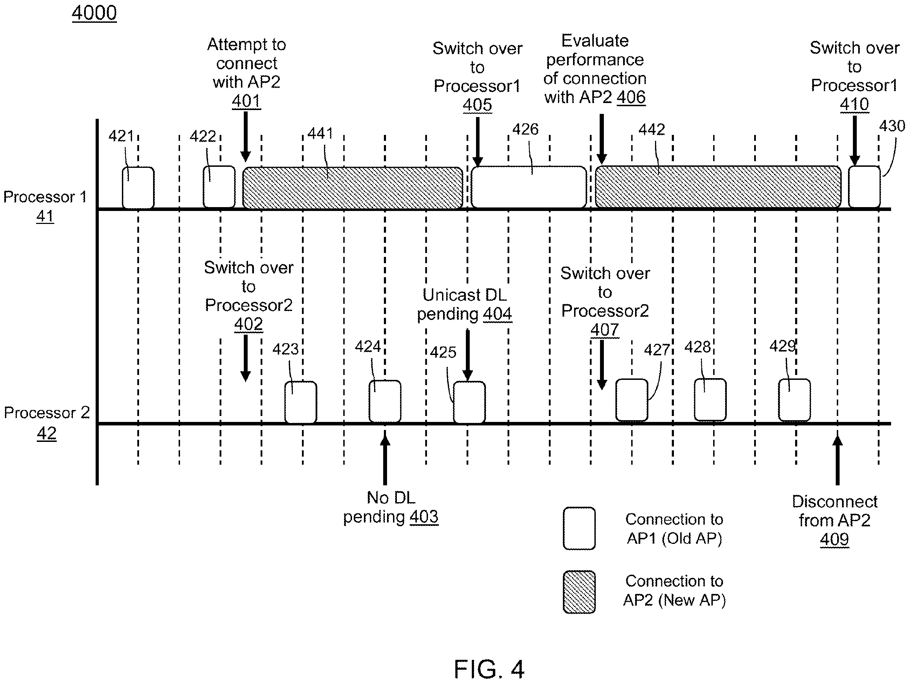

FIG. 4 is a timing diagram 4000 of AOCC operations for connecting a new AP (e.g., AP2), in accordance with an embodiment. In an AOCC system (e.g., Wi-Fi AOCC system) including a controller (e.g., controller 10), a main processor 41 and an auxiliary processor 42, when the main processor 41 is to establish a connection with a new AP (e.g., AP2) as part of the roam (e.g., the main processor 41 attempts to connect with AP2 at step 401) or even after completing the connection with AP2 for a brief period of time to evaluate which of the connections among the two (e.g., connections to AP1 and AP2) performs better (e.g., the controller evaluates performance of the connection with AP2 at step 406), the main processor 41 may put the current connection in a power save mode and attempt to connect with AP2, while the auxiliary processor 42 being brought up on the old connection with AP1 (e.g., the connection with AP1 is switched over to the auxiliary processor 42 at step 402). Hence, the auxiliary processor 42 may take over the existing connection (with AP1) partially to track beacons (e.g., beacon frames 421, 422, 423, 424, 425, 427, 428, 429). In this manner, the controller can keep the context of both the connections (e.g., connections with AP1 and AP2) and switch the (main and auxiliary) processors appropriately. The main processor 41 can also make a new target connection as part of roaming without bothering about the existing connection as the connection has already been offloaded to the auxiliary processor 42.

Referring to FIG. 4, once the controller finds a new roam target (e.g., AP2) through a roam scan, the controller may use the main processor 41 for making/establishing a new connection 441 by parking/transferring the existing connection (to AP1) on/to the auxiliary processor 42. The auxiliary processor 42 may keep track of beacon frames (e.g., beacon frames 423, 424, 425) from AP1 and inform the pending data traffic to the controller based on the TIM IE in the beacon frames (e.g., TIM indicates no DL traffic pending at AP1 at step 403 while TIM indicates unicast DL traffic pending at AP1 at step 404). The controller can decide/determine when to switch the main processor to the old connection to process the DL traffic from the existing connected AP.

The controller may determine whether the controller is performing one of (1) authentication frame exchange with AP2, (2) association frame exchange with AP2, or (3) 4-way handshake exchange with AP2. In response to determining that the controller is performing one of the exchanges (1)-(3) with AP2, the controller may defer processing the DL traffic from AP1. In response to determining that the controller is in between the exchanges (1)-(3) with AP2, the controller can switch the main processor 41 to AP1 to process the DL traffic with the old connection 426 (e.g., the connection with AP1 is switched over to the main processor 41 at step 405). In other words, when the main processor 41 is performing a critical activity on the new connection front, then swapping the connection back to AP1 may be deferred up to a logical point but at the same time, the delay may be limited within a susceptible limit.

When the new connection with AP2 is successfully made/established, the controller may evaluate the performance of the new connection with AP2 (e.g., the controller evaluates performance of the new connection with AP2 at step 406 during the period 442) by retaining the existing connection with AP1 via the auxiliary processor. For example, the controller may compare a performance metric of the new connection with a performance metric of the existing connection, and determine, based on a result of the comparison, whether the new connection is performing better than the existing connection. In some embodiments, the controller may compare a performance metric of the new connection with a corresponding threshold, and determine, based on a result of the comparison, whether the new connection is performing better than the existing connection. Examples of performance metrics of a wireless connection may include, but is not limited to, bandwidth, throughput, signal strength, network jitter, uptime, packet loss, or latency of the wireless connection, or any metric that can indicate efficiency and stability of various activities and components of the wireless network. In some embodiments, in response to determining that the new connection is performing better than the existing connection, the controller may continue with the new connection by tearing down or terminating the existing connection. On the other hand, in response to determining that the new connection is not performing better than the existing connection, the controller may continue with the existing connection by tearing down or terminating the new connection. For example, the controller terminates the new connection with AP2 at step 409, and switch the existing connection with AP1 over to the main processor 41 at step 410 so that the main processor 41 can receive a beacon frame 430.

The auxiliary processor 42 (e.g., low power Wi-Fi processor) may be associated with Rx interface only (e.g., auxiliary processor 12-2). In such a case, if the auxiliary processor 42 receives a beacon frame with a TIM and the main processor 41 is not performing a critical activity on the new connection, the main processor 41 may be switched back to the existing connection to receive/handle/process data indicated in the TIM (e.g., the existing connection is switched over to the main processor 41 at step 405). This switch back operation (or operation of transferring the connection back to the main processor) may not be performed regularly or periodically but be performed only on need basis. Thus, the subsequent roam connection can be quicker and more efficient than the existing available solutions (e.g., compared to the solution in which the switch back operation is repeated almost around every beacon interval or DTIM interval irrespective of whether the DL traffic is available or not). Moreover, this switch back mechanism can be useful to save power by completing the activities on the new connection earlier by parking/transferring the existing connection to the auxiliary processor and moving/transferring the connection back to the main processor only on need basis.

Referring to FIG. 4, in response to determining that the TIM IE indicates unicast packets pending or available at AP1 for the client at step 404, the controller may bring the main processor 41 out of a power save mode and back to the old connection (e.g., connection with AP1) at step 405. The controller may determine whether the auxiliary processor 42 has a minimal transmission capability or not. In response to determining that the auxiliary processor 42 has a minimal transmission capability, the controller may control the auxiliary processor 42 to transmit a NULL frame or a PS-POLL frame to AP1 while the main processor 41 is brought back to the old connection in parallel. In response to determining that the auxiliary processor 42 does not have a minimal transmission capability, the controller may bring the main processor 41 back to the old connection and then cause the main processor 41 to send a NULL frame or a PS-POLL frame to AP1 for indicating that the client has come out of the power save mode and is ready to receive any unicast data traffic. Upon completion of the main processor receiving/processing the unicast data traffic on the old connection 426, the controller may control the main processor 41 to resume the activities on the new connection 442 and control the auxiliary processor 42 to switch back to the old connection to receive beacon frames (e.g., beacon frames 427, 428, 429). Upon completion of the main processor 42 preforming the activities on the new connection or in response to determining that the new connection is not performing better than the existing connection, the controller may control the main processor 41 to switch back to the old connection at step 410 to receive beacon frames (e.g., beacon frame 430).

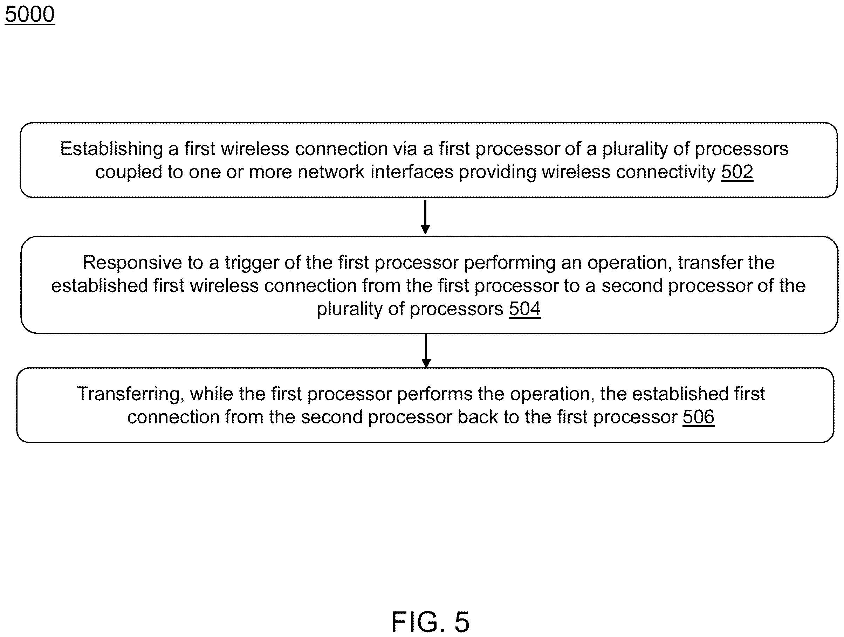

FIG. 5 is a flow diagram showing a process 500 of performing AOCC operations, in accordance with an embodiment. In some embodiments, the process 500 is performed by a controller (e.g. controller 10, one or more processors 2010, network interface device 2030). In other embodiments, the process 500 is performed by other entities. In some embodiments, the process 500 includes more, fewer, or different steps than shown in FIG. 5.

At step 502, the controller may establish a first wireless connection (e.g., connection on the current channel in FIG. 3; connection with AP1 in FIG. 4) via a first processor (e.g., main processor 31, 41) of a plurality of processors coupled to one or more network interfaces (e.g., network interfaces 14-1, 14-2) configured to provide wireless connectivity.

At step 504, responsive to a trigger of the first processor performing an operation (e.g., channel scan in FIG. 3; connection with a new AP in FIG. 4), the controller may transfer the established first wireless connection (e.g., connection on the current channel in FIG. 3; connection with AP1 in FIG. 4) from the first processor (e.g., main processor 31, 41) to a second processor (e.g., auxiliary processor 32, 42) of the plurality of processors. In some embodiments, the trigger of the first processor performing the operation may be any event or situation relating to a start of the operation (e.g., an event of the first processor starting a process of the operation, an event of the first processor communicating information regarding the start of the operation to the controller, etc.).

At step 506, the controller may transfer, while the first processor performs the operation (e.g., while the main processor performs channel scan in FIG. 3 or a connection with a new AP in FIG. 4), the established first connection (e.g., connection on the current channel in FIG. 3; connection with AP1 in FIG. 4) from the second processor (e.g., auxiliary processor 32, 42) back to the first processor (e.g., main processor 31, 41).

In some embodiments, the operation may be scanning for one or more channels (see FIG. 3). In transferring the established first connection from the second processor (e.g., auxiliary processor 32) back to the first processor (e.g., main processor 31), responsive to the second processor detecting data to be received from the established first connection (e.g., TIM indicating unicast DL traffic pending at AP1 at step 304), the established first connection may be transferred from the second processor (e.g., auxiliary processor 32) back to the first processor (e.g., main processor 31). Responsive to completion of scanning for the one or more channels (e.g., completion of the scan at step 309), the established first connection (e.g., connection with AP1) may be transferred from the second processor back to the first processor (e.g., the connection with AP is switched over to the main processor 31 at step 310).

In some embodiments, the first connection may be established to a first access point (e.g., old connection with AP1; see FIG. 4). The operation may be establishing a second wireless connection to a second access point (e.g., new connection with AP2) via the first processor (see FIG. 4). In transferring the established connection from the second processor (e.g., auxiliary processor 42) back to the first processor (e.g., main processor 41), responsive to determining that the first wireless connection is performing better than the second wireless connection (e.g., controller evaluates performance of the new connection with AP2 at step 406), the first wireless connection (e.g., old connection with AP1) may be transferred from the second processor back to the first processor (e.g., the connection with AP1 is switched over to the main processor 41 at step 410). In some embodiments, responsive to determining that the second wireless connection is performing better than the first wireless connection, the first wireless connection transferred to the second processor may be terminated (e.g., the connection with AP1 is terminated via the auxiliary processor 42).

The term "coupled" and variations thereof includes the joining of two members directly or indirectly to one another. The term "electrically coupled" and variations thereof includes the joining of two members directly or indirectly to one another through conductive materials (e.g., metal or copper traces). Such joining (for both terms "coupled" and "electrically coupled") may be stationary (e.g., permanent or fixed) or moveable (e.g., removable or releasable). Such joining (for both terms "coupled" and "electrically coupled") may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities that can operate within a system or environment. It should be understood that the systems described above can provide multiple ones of any or each of those components and these components can be provided on either a standalone machine or, in some embodiments, on multiple machines in a distributed system. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code. In some embodiments, the ADC is employed as an integrated circuit in a transmitter for wireless communication. The ADC is provided on an integrated circuit that includes the calibration engine. The ADC and calibration engine are provided in a single chip or multichip integrated package in some embodiments.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A device (100) comprising:
a plurality of processors (12-1, 12-2, ..., 12-N) coupled to one or more network interfaces (14-1, ..., 14-M) configured to provide wireless connectivity; and
a controller (10) configured to:
establish a wireless connection (120-1, ..., 120-K) via a first processor (12-1) of the plurality of processors (12-1, 12-2, ..., 12-N);
responsive to a trigger of the first processor (12-1) scanning for one or more channels, transfer the established wireless connection (120-1, ..., 120-K) from the first processor (12-1) to a second processor (12-2) of the plurality of processors (12-1, 12-2, ..., 12-N), wherein the second processor (12-2) is different from the first processor (12-1); and
responsive to the second processor (12-2) detecting data to be received from the established wireless connection (120-1, ..., 120-K), transfer the established wireless connection (120-1, ..., 120-K) from the second processor (12-2) back to the first processor (12-1).

2. The device (100) of claim 1, wherein the controller (10) is configured to:
responsive to completion of scanning for the one or more channels, transfer the established connection (120-1, ..., 120-K) from the second processor (12-2) back to the first processor (12-1).

3. The device (100) of claim 1 or 2, wherein the controller (10) is configured to establish the wireless connection (120-1, ..., 120-K) via the first processor (12-1) to an access point (150-1, ..., 150-K).

4. The device (100) of claim 3, wherein responsive to transferring the established connection (120-1, ..., 120-K) from the first processor (12-1) to the second processor (12-2), the second processor (12-2) is configured to receive one or more beacons from the access point (150-1, ..., 150-K).

5. The device (100) of any of claims 1 to 4, wherein responsive to transferring the established wireless connection (120-1, ..., 120-K) from the second processor (12-2) back to the first processor (12-1), the first processor (12-1) is configured to receive the data from the access point (150-1, ..., 150-K).

6. The device (100) of claim 5, wherein responsive to completion of receiving the data from the access point (150-1, ..., 150-K), the controller (10) is configured to:
transfer the established wireless connection (120-1, ..., 120-K) from the first processor (12-1) to the second processor (12-2).

7. The device (100) of any of claims 1 to 6, wherein the data to be received from the established wireless connection (120-1, ..., 120-K) is unicast data addressed to the device (100).

8. A device (100) comprising:
a plurality of processors (12-1, 12-2, ..., 12-N) coupled to one or more network interfaces (14-1, ..., 14-M) configured to provide wireless connectivity,
a controller (10) configured to:
establish a first wireless connection (120-1) to a first access point (150-1) via a first processor (12-1) of the plurality of processors (12-1, 12-2, ..., 12-N);
transfer the first wireless connection (120-1) from the first processor (12-1) to a second processor (12-2) of the plurality of processors (12-1, 12-2, ..., 12-N), wherein the second processor (12-2) is different from the first processor (12-1);
establish a second wireless connection (120-2) to a second access point (150-2) via the first processor (12-1); and
responsive to determining that a performance metric of the first wireless connection (120-1) is greater than a performance metric of the second wireless connection (120-2), transfer the first wireless connection (120-1) from the second processor (12-2) back to the first processor (12-1).

9. The device (100) of claim 8, comprising at least one of the following features:
wherein the controller (10) is configured to:
responsive to determining that the performance metric of the second wireless connection (120-2) is greater than the performance metric of the first wireless connection (120-1), terminate the first wireless connection (120-1) transferred to the second processor (12-2);
wherein the controller (10) is configured to:
establish, while the second processor (12-2) maintains the first wireless connection (120-1) to the first access point (150-1), the second wireless connection (120-2) to the second access point (150-2) via the first processor (12-1);
wherein responsive to transferring the first wireless connection (120-1) from the first processor (12-1) to the second processor (12-2), the second processor (12-2) is configured to receive one or more beacons from the first access point (150-1).

10. The device (100) of claim 8 or 9, comprising at least one of the following features:
wherein responsive to the second processor (12-2) detecting data to be received from the first access point (150-1), the controller (10) is configured to:
transfer the first wireless connection (120-1) from the second processor (12-2) back to the first processor (12-1);
wherein responsive to transferring the first wireless connection (120-1) from the second processor (12-2) back to the first processor (12-1), the first processor (12-1) is configured to receive the data from the first access point (150-1).

11. A method comprising:
establishing a first wireless connection (120-1) via a first processor (12-1) of a plurality of processors (12-1, 12-2, ..., 12-N) coupled to one or more network interfaces (14-1, ..., 14-M) configured to provide wireless connectivity;
responsive to a trigger of the first processor (12-1) performing an operation, transfer the established first wireless connection (120-1) from the first processor (12-1) to a second processor (12-2) of the plurality of processors (12-1, 12-2, ..., 12-N), wherein the second processor (12-2) is different from the first processor (12-1); and
transferring, while the first processor (12-1) performs the operation, the established first connection (120-1) from the second processor (12-2) back to the first processor (12-1).

12. The method of claim 11, wherein
the operation is scanning for one or more channels.

13. The method of claim 12, comprising at least one of the following features:
wherein transferring the established first connection (120-1) from the second processor (12-2) back to the first processor (12-1) comprises:
responsive to the second processor (12-2) detecting data to be received from the established first connection (120-1), transferring the established first connection (120-1) from the second processor (12-2) back to the first processor (12-1);
further comprising:
responsive to completion of scanning for the one or more channels, transferring the established first connection (120-1) from the second processor (12-2) back to the first processor (12-1).

14. The method of any of claims 11 to 13, wherein
the first connection (120-1) is established to a first access point (150-1), and
the operation is establishing a second wireless connection (120-2) to a second access point (150-2) via the first processor (12-1).

15. The method of claim 14, comprising at least one of the following features:
wherein transferring the established connection from the second processor (12-2) back to the first processor (12-1) comprises:
responsive to determining that a performance metric of the first wireless connection (120-1) is greater than a performance metric of the second wireless connection (120-2), transferring the first wireless connection (120-1) from the second processor (12-2) back to the first processor (12-1);
further comprising:
responsive to determining that the performance metric of the second wireless connection (120-2) is greater than the performance metric of the first wireless connection (120-1), terminating the first wireless connection (120-1) transferred to the second processor (12-2).
